Europäisches Patentamt

**European Patent Office**

Office européen des brevets

(19)

(11) Numéro de publication: **0 035 309**
**B1**

(12) **FASCICULE DE BREVET EUROPEEN**

(45) Date de publication du fascicule du brevet:
**23.11.83**

(51) Int. Cl.³: **B 29 D 11/00, G 02 C 7/04**

(21) Numéro de dépôt: **81200217.8**

(22) Date de dépôt: **24.02.81**

(54) **Procédé de fabrication par moulage de lentille de contact et lentilles obtenues.**

(30) Priorité: **28.02.80 FR 8004750**

(43) Date de publication de la demande:
**09.09.81 Bulletin 81/36**

(45) Mention de la délivrance du brevet:
**23.11.83 Bulletin 83/47**

(84) Etats contractants désignés:
**AT BE CH DE GB IT LI NL SE**

(56) Documents cités:
**FR - A - 2 270 082**
**FR - A - 2 321 377**
**US - A - 4 166 088**

(73) Titulaire: **MEDICORNEA Société Anonyme, Rue Colomiés Site Industriel Thibaud-Miraii B.P. 3194, F-31036 Toulouse Cedex (FR)**

(72) Inventeur: **Feurer, Bernard, 31, rue des Tourterelles, F-31650 Saint-Orens-de-Gameville (FR)**

(74) Mandataire: **Barre, Philippe, Cabinet Barre-Gatti-Laforgue 95 rue des Amidonniers, F-31069 Toulouse Cédex (FR)**

ACTORUM AG

## Procédé de fabrication par moulage de lentille de contact et lentilles obtenues

L'invention concerne un procédé de fabrication, par moulage, d'une lentille de contact, constituant un produit fini ayant les qualités optiques requises pour être mis en place au contact d'un œil et assurer les corrections recherchées.

On sait que les lentilles de contact sont traditionnellement réalisées par usinage à partir d'ébauches ou palets réalisés par polymérisation d'une composition monomère synthétique; ces palets (ou ébauches) sont généralement obtenus par polymérisation dans des moules sans que leur fabrication s'accompagne de difficultés particulières, puisque les surfaces optiques sont ensuite usinées à partir de ceux-ci.

Cet usinage des palets pour donner aux lentilles leur forme définitive avec les qualités optiques requises est une opération longue, délicate, onéreuse, et qui requiert un personnel spécialisé nombreux. Pour supprimer cette opération d'usinage, on a eu l'idée de fabriquer directement par moulage les lentilles de contact, en assurant la polymérisation de la composition de base dans un moule fermé reproduisant en creux la forme définitive de la lentille à obtenir.

Toutefois, ce type de fabrication se heurte à un problème extrêmement difficile à résoudre en pratique, pour parvenir à obtenir des lentilles dont les surfaces présentent les qualités optiques requises et les bords une minceur et un profil adéquats pour être physiologiquement supportés par l'œil. En effet, au cours de la polymérisation qui est en général produite à une température de l'ordre de 60 à 70°C, on constate des décollements de la matière de la lentille par rapport au moule avec formation de minuscules poches entre la lentille et les parois du moule; les lentilles ainsi fabriquées sont inutilisables de sorte que, malgré leur intérêt apparent, ces procédés de moulage n'ont pu jusqu'à présent faire l'objet d'une exploitation effective sur le plan industriel.

Les spécialistes qui se sont penchés sur le problème ont expliqué le décollement des lentilles et la formation des poches par un phénomène de retrait que subirait la matière à chaud en cours de polymérisation.

Ainsi, dans le document de brevet français N° 2345279, on a tenté de résoudre le problème en réalisant un moule spécial doté sur son pourtour de lèvres élastiques qui ont pour fonction de remplir l'espace vide ayant tendance à apparaître autour de la lentille, afin d'éviter le décollement de la lentille et la formation des poches sus-évoquées.

On parvient ainsi à un certain résultat, ce qui a renforcé la thèse selon laquelle les difficultés provenaient des retraits de matière au cours de la polymérisation.

Toutefois, le procédé décrit dans le document de brevet sus-évoqué exige la réalisation de moules de structure spéciale dont les lèvres élastiques très minces ont rapidement tendance à se détériorer. De plus et surtout, la bordure des lentilles fabriquées dans ces moules est généralement relativement épaisse et peu régulière; lorsqu'elles sont posées, de telles lentilles présentent l'inconvénient d'être fréquemment déplacées par le mouvement des paupières qui s'accrochent sur leur bordure.

Par ailleurs, certains procédés ont utilisé des moules non étanches, ayant à leur périphérie des bords ouverts, ces procédés consistant à verser dans ces moules de la matière en excès, qui peut s'évacuer par les bords ouverts (exemple: brevet FR N° 2270082); toutefois, ces procédés exigent une reprise des lentilles pour usiner les bords de celles-ci après moulage. De plus, dans ce type de procédé, la mise en œuvre du moulage est beaucoup plus complexe et délicate, la polymérisation devant s'effectuer progressivement depuis le centre jusque vers les bords du moule; généralement, on ajuste les conditions de polymérisation de sorte que celle-ci s'effectue en deux phases, d'abord un début de polymérisation au centre du moule (au cours duquel on évite la polymérisation des bords), ensuite une polymérisation périphérique.

La présente invention vise un procédé de fabrication par moulage, dans lequel on polymérise une composition de base dans un moule étanche, composé de parties refermées de manière étanche l'une contre l'autre et reproduisant en creux la forme de la lentille à obtenir.

L'invention se propose de fournir une solution au problème de moulage sus-évoqué, sans avoir les inconvénients des solutions connues.

Un objectif de l'invention est, en particulier, de permettre de fabriquer en une seule fois par moulage en moule fermé étanche une lentille de contact finie.

Un autre objectif est d'indiquer un procédé susceptible d'être mis en œuvre dans des moules de structure simple, non soumis à des risques d'usure rapide.

A cet effet, le procédé de fabrication conforme à l'invention pour réaliser une lentille cornéenne de qualité optique appropriée par polymérisation d'une composition de base dans un moule fermé étanche consiste:

— à réaliser le moule en un matériau transparent ou peu absorbant à l'égard des ondes électromagnétiques de longueur d'onde approximativement comprise entre 1 et $10^{-6}$ µm, ledit moule étant réalisé de façon à posséder une inertie thermique très supérieure à celle de la quantité de composition de base nécessaire pour réaliser une lentille,

— à élaborer de façon connue en soi une composition de base à partir d'un ou de monomères à doubles liaisons polymérisables, ayant un caractère absorbant à l'égard des ondes électromagnétiques sus-évoquées, et

— à assurer la polymérisation de la composition à l'intérieur du moule fermé, par irradiation de l'ensemble au moyen d'ondes électromagnétiques ayant la longueur d'onde précitée, avec une densité de puissance adaptée pour conserver une température inférieure à approximativement 40°C au niveau du moule.

On constate, au cours de la mise en œuvre d'un tel procédé, que la matière de la lentille demeure appliquée contre le moule et en épouse parfaitement la forme, aussi bien dans les zones centrales que sur la bordure de la lentille. A la fin de la polymérisation, la lentille comporte un état de surface satisfaisant sur le plan optique avec, en particulier, des bords réguliers qui reproduisent la conformation indéformable du moule à ce niveau; grâce à une forme appropriée du moule, ces bords peuvent donc avoir une épaisseur faible, décroissant progressivement conformément aux exigences requises pour les lentilles cornéennes et ce de façon reproductible au cours de moulages successifs de séries de lentilles.

L'explication de l'obtention de ce résultat inattendu tient vraisemblablement dans les deux faits suivants: d'une part, contrairement à ce que l'on croyait, la formation des poches dans les procédés classiques provient au moins autant des dilatations différentielles à chaud du moule et de la composition de base que des retraits de cette dernière; d'autre part, les retraits de la composition de base au cours d'une polymérisation à température faible sont à eux seuls insuffisants pour produire un décollement.

Le procédé de l'invention conduit à dissiper l'énergie nécessaire à la polymérisation au cœur de la matière de la lentille, en évitant d'échauffer celle-ci trop fortement, et surtout en évitant d'échauffer le moule qui n'absorbe pratiquement pas d'énergie et possède une inertie thermique élevée par rapport à la matière de la lentille.

Dans ces conditions, on évite des dilatations sensibles du moule, qui sont l'une des causes essentielles, semble-t-il, des difficultés rencontrées dans les procédés classiques, cependant que les retraits de la matière de la lentille deviennent acceptables.

De préférence, l'irradiation est effectuée au moyen de rayons ultraviolets de longueur d'onde comprise entre 0,2 et 0,4 µm. Cette bande de longueur d'onde conduit en pratique à un appareillage de type courant ne présentant aucun danger pour les utilisateurs; en outre, dans cette bande de longueurs d'onde, il est facile de choisir pour le moule un matériau très peu absorbant, par exemple polymère non chargé tel que polypropylène ou polyéthylène, cependant que de nombreuses compositions monomères à doubles liaisons polymérisables présentent un caractère absorbant à l'égard de ces ondes électromagnétiques et notamment les monomères vinyliques ou allyliques; il est possible, le cas échéant, d'accroître ce pouvoir absorbant en ajoutant à la composition de base un agent photosensibilisateur tel que benzoïne, azobisisobutyronitrile.

Bien entendu, le matériau du moule doit être compatible avec la composition de base polymérisable, c'est-à-dire être parfaitement neutre à l'égard de celle-ci.

L'irradiation est de préférence assurée de sorte que la densité de puissance au niveau de l'ensemble moule/composition de base soit comprise entre $0,1 \cdot 10^{-3}$ et $100 \cdot 10^{-3}$ W/cm³.

Ce niveau de puissance est en général suffisant pour amorcer la réaction de polymérisation et entretenir convenablement celle-ci, tout en conservant en tout point une température modérée, inférieure à 40°C, et en particulier comprise entre 10 et 30°C.

On choisira de préférence, pour constituer la composition de base un monomère ou un mélange de monomères ayant une molécule de volume élevé, en particulier du groupe suivant: hydroxyéthylméthacrylate, hydroxypropylméthacrylate, hydroxyéthylacrylate, éthylèneglycoldiméthacrylate, vinylpyrrolidone, glycidylméthacrylate, méthacrylamidebisphénol-A-diméthacrylate, bisphénol-A-bis-(2-hydroxypropylméthacrylate). Ces monomères présentent, au cours de la polymérisation à faible température, un retrait faible, permettant d'obtenir une qualité parfaitement satisfaisante des lentilles.

Le monomère ou le mélange de monomères constituant la composition de base peut être mélangé avec des polymères linéaires, ce qui réduit encore le retrait en cours de polymérisation et permet, dans certaines applications, d'améliorer le résultat. On peut, en particulier, mélanger les polymères linéaires suivants: polyglycidylméthacrylate, polyméthylméthacrylate, polyvinylpyrrolidone.

Il est possible de mettre en œuvre le procédé de l'invention à la pression atmosphérique, et c'est ainsi en pratique que l'on opérera généralement en vue de réduire le coût des appareillages nécessaires; on a pu observer toutefois qu'une augmentation de la pression constituait un facteur favorable et, dans certaines applications, on pourra opérer à une pression de l'ordre de 2 à 10 bar.

Le moule utilisé doit en pratique mettre en jeu une masse de matériau au moins 20 fois supérieure à celle de la quantité de composition de base nécessaire pour réaliser une lentille, de façon à assurer par l'inertie thermique une régulation de température satisfaisante. Par exemple, pour une lentille de 0,03 g, on peut utiliser un moule en deux parties, ayant chacune une masse de l'ordre de 1 g. Le cas échéant, la surface externe du moule peut être refroidie par un fluide en mouvement.

La description qui suit donne à titre non limitatif plusieurs exemples de mise en œuvre du procédé conforme à l'invention, qui ont été réalisés au moyen d'une installation et d'un moule, tels que schématisés aux dessins annexés; sur ces dessins:

— la fig. 1 est une vue en coupe axiale des deux parties d'un moule, en position séparée,

— les fig. 2 et 3 sont des vues schématiques, illustrant la mise en place de la composition de base dans le moule,

— la fig. 4 est une vue schématique d'une installation d'irradiation pour la mise en œuvre du procédé.

Avant de fournir les conditions spécifiques de mise en œuvre des exemples, on va fournir ci-après les caractéristiques des matériels permettant cette mise en œuvre, ainsi que les conditions du procédé communes aux divers exemples.

Le procédé décrit en l'exemple vise à fabriquer par moulage des lentilles de contact hydrophiles (ou lentilles souples) ayant, après moulage, toutes les caractéristiques requises (géométriques, mécaniques et optiques) sans qu'il soit besoin de leur faire subir des opérations d'usinage ou autres finitions.

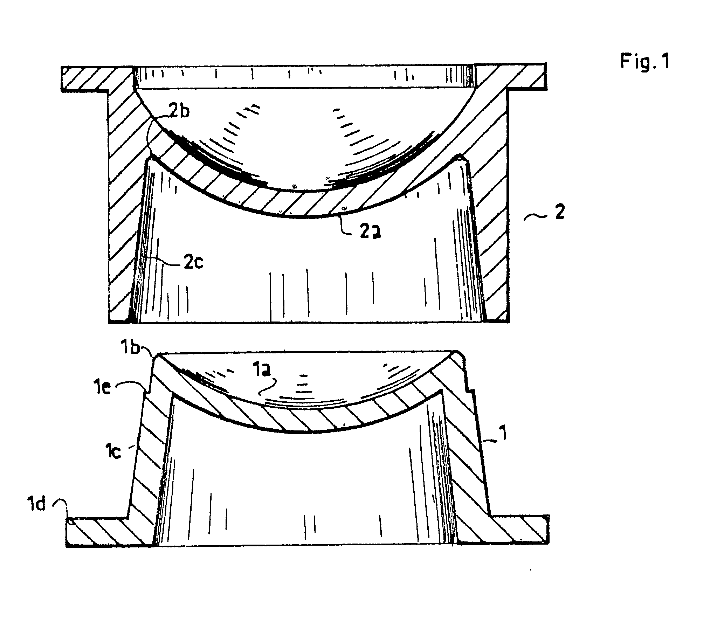

On utilise à cet effet un moule formé de deux parties 1 et 2 (fig. 1). Ce moule est fabriqué à partir d'un matériau transparent à l'égard des rayonnements ultraviolets et ne réagissant pas chimiquement avec les compositions de base généralement utilisées pour réaliser des lentilles hydrophiles (mélanges de monomères vinyliques et allyliques).

De plus, le matériau du moule doit permettre un démoulage facile de la lentille; il doit également permettre l'obtention de surface de moulage présentant une qualité de poliglacé compatible avec la qualité optique requise de la lentille finale.

Pour les exemples qui suivent, le moule est réalisé en polypropylène pur non chargé, c'est-à-dire ne comportant aucun additif ayant un caractère absorbant à l'égard des rayonnements utilisés. Les deux parties du moule sont obtenues par moulage par injection; bien entendu, les moules peuvent, le cas échéant, être usinés et polis et obtenus par tout autre procédé.

La partie 1 présente une face concave 1a ayant un rayon Ra égal au rayon de la face convexe de la lentille à réaliser. Cette face 1a se prolonge par un méplat périphérique 1b incliné vers l'extérieur.

Extérieurement, cette partie comporte un flanc légèrement conique 1c qui s'interrompt en partie haute pour former une échancrure périphérique 1e, appelée à recevoir l'excédent de composition de base, qui est chassé en fin d'emboîtement des deux parties du moule.

En l'exemple, la partie 1 est en outre évidée dans son volume non utile pour permettre une fabrication précise du moule par injection; cette partie est supportée par une collerette périphérique 1d.

Le diamètre total de cette partie est de l'ordre de 15 mm et son poids de l'ordre de 1 g.

L'autre partie du moule est destinée à venir coiffer la première partie 1 et possède un poids du même ordre. Elle comprend une face convexe 2a, ayant un rayon Ro égal à celui de la face concave de la lentille à réaliser.

Cette face 2a se prolonge par un méplat 2b, conjugué au méplat 1b et appelé à venir en appui contre celui-ci.

Cette partie 2 du moule comprend en outre un flanc conique 2c de forme adaptée pour venir en appui contre le flanc 1c et assurer une bonne étanchéité grâce à un appui portant sur une grande surface.

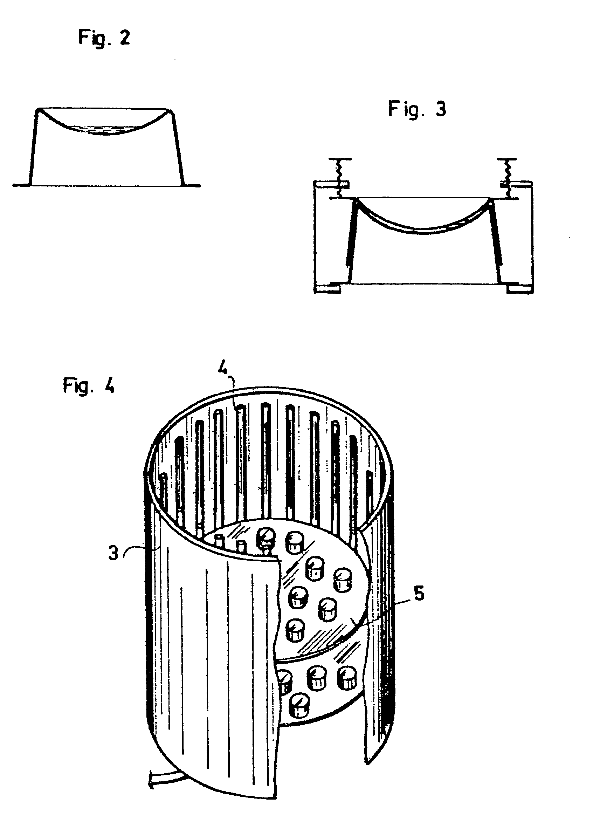

Au début des opérations, la composition de base est disposée en léger excédent dans la partie 1 du moule à l'intérieur du logement délimité par la face concave 1a, comme le schématise la fig. 2.

La partie 2 est ensuite emboîtée sur la partie 1 jusqu'à ce que les méplats périphériques 1b et 2b

et les flancs coniques 1c et 2c s'appliquent respectivement les uns sur les autres.

Au cours de cette opération, l'excédent de la composition de base est chassé dans l'échancrure 1e. De façon générale, le poids de la composition de base restant entre les faces 1a et 2a n'excède par 0,05 g environ pour une lentille hydrophile de type courant.

Un organe de serrage est ensuite mis en place pour maintenir les deux parties du moule appliquées l'une contre l'autre (fig. 3). Bien entendu, cet organe est prévu en matériau non absorbant à l'égard des rayonnements utilisés.

L'ensemble est alors prêt pour la polymérisation. Il est introduit avec une pluralité d'autres moules préparés de la même manière dans une enceinte 3 sur des supports 5 en matériau non absorbant à l'égard des rayonnements; cette enceinte est équipée de plusieurs tubes 4 à vapeur de mercure, aptes à émettre un rayonnement ultraviolet ayant une densité de puissance de l'ordre de $13 \cdot 10^{-3}$ W/cm$^3$ dans l'enceinte, la longueur d'onde des rayonnements étant de l'ordre de 0,3 à 0,35 µm.

Dans tous les exemples fournis ci-après, la durée de polymérisation a été de plusieurs heures (entre 5 et 7 h) et, à tout instant, la température est restée inférieure à 40°C.

On n'a observé aucune apparition de poche entre le moule et la matière en cours de polymérisation, et les lentilles obtenues présentaient des caractéristiques géométriques et optiques tout à fait satisfaisantes. Le polymère obtenu au terme de la polymérisation est remarquablement homogène dans tout le volume de la lentille, ce qui est une qualité très favorable sur le plan optique.

Notons que les moules sont rigides et ne comportent aucune partie fragile; ils ont pu être utilisés pour de nombreux essais sans détérioration apparente.

Les mêmes essais ont été reproduits avec des lampes à filament, donnant une irradiation de longueur d'onde égale à 0,36 µm avec une densité de puissance de l'ordre de $3,3 \cdot 10^{-3}$ W/cm$^3$.

Les durées de polymérisation ont été plus longues (de l'ordre de 7 à 9 h). La qualité des lentilles est équivalente.

*Exemple 1:*

La composition de base disposée dans le moule fermé est la suivante (% en poids):
Hydroxyéthylméthacrylate (Hema): 72,18
Hydroxypropylméthacrylate (Hpma): 23,75
Hydroxyéthylacrylate (Hea): 2,00
Ethylèneglycoldiméthacrylate (Egdma): 0,05
Polyvinylpyrrolidone (PVP): 2,00
Azobisisobutyronitrile (AIBN): 0,016

La température ambiante était de 20°C et la température maximale dans l'enceinte 3, au niveau du moule, de l'ordre de 30°C. La polymérisation a duré environ 5 h avec les tubes à vapeur de mercure et environ 7 h avec les lampes à filament.

Le matériau obtenu est apte à absorber environ 40% d'eau (en poids, par rapport au poids final de la lentille hydratée).

*Exemple 2:*

Vinylpyrrolidone (VP): 59,8%
Glycidylméthacrylate (GMA): 35%
Méthacrylamide (MC): 5%
AIBN: 0,016%

Température ambiante: 20°C.
Température maximale au cours de la polymérisation: 25°C.
Durée: 6 h avec les tubes à vapeur de mercure.
Durée: 8 h avec les lampes à filament.
Proportion d'eau absorbable par la lentille finie: 70%.

Dans cet exemple, un courant d'air était envoyé à la base de l'enceinte pour conditionner celle-ci à 25°C.

*Exemple 3:*

VP: 63,8%
GMA: 20,0%
Polyglycidylméthacrylate (PGMA): 16,0%
Bisphénol-A-diméthacrylate (BPAD): 0,20% Température ambiante: 20°C.
Température maximale au cours de la polymérisation: 30°C.
Durée: 5 h (tubes à vapeur de mercure).
Durée: 7 h (lampes à filament).
Proportion d'eau absorbable: 70%.

*Exemple 4:*

VP: 59,8%
PGMA: 39,9%
BPAD: 0,1%
AIBN: 0,016%

Température ambiante: 20°C.
Température maximale au cours de la polymérisation: 30°C.
Durée: 5 h (tubes à vapeur de mercure).
Durée: 7 h (lampes à filament).
Proportion d'eau absorbable: 84%.

*Exemple 5:*

VP: 60%
Polyméthylméthacrylate: 10%
Hpma: 30%

Température ambiante: 10°C.
Température maximale au cours de la polymérisation: 18°C.
Durée: 7 h (tubes à vapeur de mercure).
Durée: 9 h (lampes à filament).
Proportion d'eau absorbable: 73%.

Il est à remarquer que les exemples 3, 4 et 5 utilisent des matériaux avantageux pour le procédé, car leur retrait à froid est très faible en raison de la présence de polymères linéaires qui n'apportent par eux-mêmes aucun retrait. Les exemples 1 et 2 utilisent des matériaux à retrait plus important; toutefois, le volume initial de la molécule de ces monomères est suffisamment grand pour permettre l'obtention d'un résultat satisfaisant, le retrait de ces matériaux à froid étant compatible avec l'obtention de lentilles de qualités appropriées, compte tenu de l'absence de dilatation des moules au cours du procédé.

Il est à noter que les lentilles hydrophiles peuvent être obtenues à l'état sec, à l'état partiellement hydraté ou à l'état entièrement hydraté, par adjonction adéquate d'eau à la composition de base.

Bien entendu, le procédé conforme à l'invention permet d'obtenir des lentilles non hydrophiles grâce à un choix approprié des monomères de base.

**Revendications**

1. Procédé de fabrication d'une lentille de contact finie, du type consistant à polymériser une composition de base dans un moule étanche fermé (1, 2) reproduisant en creux la forme de la lentille à obtenir, ledit procédé étant caractérisé en ce que:
— on réalise le moule (1, 2) en un matériau transparent ou peu absorbant à l'égard des ondes électromagnétiques de longueur d'onde approximativement comprise entre 1 et $10^{-6}$ μm, ledit moule étant réalisé de façon à posséder une inertie thermique très supérieure à celle de la quantité de composition de base nécessaire pour réaliser une lentille,
— de façon connue en soi, on élabore une composition de base à partir d'un ou de monomères à doubles liaisons polymérisables, ayant un caractère absorbant à l'égard des ondes électromagnétiques sus-évoquées, et
— on assure la polymérisation de la composition à l'intérieur du moule fermé, par irradiation de l'ensemble au moyen d'ondes électromagnétiques ayant la longueur d'onde précitée, avec une densité de puissance adaptée pour conserver une température inférieure à approximativement 40°C au niveau du moule.

2. Procédé de fabrication selon la revendication 1 dans lequel la composition de base est un monomère ou un mélange de monomères vinyliques ou allyliques ou un mélange de ces monomères avec des polymères linéaires, la polymérisation étant assurée par irradiation au moyen de rayons ultraviolets de longueur d'onde comprise entre 0,2 et 0,4 μm.

3. Procédé de fabrication selon l'une des revendications 1 ou 2, dans lequel le matériau du moule (1, 2) est un polymère non chargé tel que le polypropylène ou polyéthylène, la polymérisation de la composition de base étant assurée par irradiation au moyen de rayons ultraviolets de longueur d'onde comprise entre 0,2 et 0,4 μm.

4. Procédé de fabrication selon l'une des revendications 2 ou 3, dans lequel on ajoute à la composition de base un agent photosensibilisateur, adapté pour augmenter le pouvoir absorbant de ladite composition.

5. Procédé de fabrication selon l'une des revendications 1, 2, 3 ou 4, dans lequel la composition de base est un monomère ou un mélange de monomères ayant une molécule de volume élevé, du groupe suivant: hydroxyéthylméthacrylate, hydroxypropylméthacrylate, hydroxyéthylacrylate, éthylèneglycoldiméthacrylate, vinylpyrrolidone, glycidylméthacrylate, méthacrylamide, bisphénol-A-bis-(2-hydroxypropylméthacrylate).

6. Procédé de fabrication selon la revendication 5, caractérisé en ce qu'on mélange à la composition de base au moins un polymère linéaire, en particulier: polyglycidylméthacrylate, polyméthylméthacrylate, polyvinylpyrrolidone.

7. Procédé de fabrication selon l'une des revendications 1, 2, 3, 4, 5 ou 6, caractérisé en ce que l'irradiation est assurée de sorte que la densité de puissance au niveau de l'ensemble moule/composition de base soit comprise entre environ $0,1 \cdot 10^{-3}$ et $100 \cdot 10^{-3}$ W/cm³.

8. Procédé de fabrication selon l'une des revendications 1, 2, 3, 4, 5, 6 ou 7, caractérisé en ce que l'on opère sous une pression égale à la pression atmosphérique.

9. Procédé de fabrication selon l'une des revendications 1, 2, 3, 4, 5, 6 ou 7, caractérisé en ce que l'on opère sous une pression supérieure à la pression atmosphérique, de l'ordre de 2 à 10 bar.

10. Procédé de fabrication selon l'une des revendications 1, 2, 3, 4, 5, 6, 7, 8 ou 9, caractérisé en ce que l'on utilise un moule (1, 2) mettant en jeu une masse de matériau au moins 20 fois supérieure à celle de la quantité de composition de base nécessaire pour réaliser une lentille.

11. Procédé de fabrication selon l'une des revendications 1 à 10 dans lequel on utilise un moule en deux parties (1, 2), l'une ayant une face concave (1a) pour la formation de la face convexe de la lentille, l'autre ayant une face convexe (2a) pour la formation de l'autre face de la lentille, caractérisé en ce que, après mise en place de la composition de base dans la partie à face concave, les deux parties du moule (1, 2) sont refermées de manière étanche l'une dans l'autre, grâce à des flancs périphériques légèrement coniques (1c, 2c) que comportent les deux parties de moule.

12. Lentille de contact réalisée par mise en œuvre du procédé conforme à l'une des revendications 1 à 11.


## Patentansprüche

1. Verfahren zur Herstellung eines fertigen Haftglases, welches darin besteht, dass man eine Grundmasse in einer geschlossenen, dichten Pressform (1, 2) polymerisiert und dabei die Form der zu erhaltenden Linse hohlgegossen nachbildet, wobei das besagte Verfahren dadurch gekennzeichnet ist, dass

— man die Pressform (1, 2) aus einem für elektromagnetische Wellen mit einer Wellenlänge zwischen etwa 1 und $10^{-6}$ µm durchlässigen oder sie schwach absorbierenden Werkstoff herstellt, wobei die besagte Pressform so hergestellt ist, dass sie eine viel höhere Wärmeträgheit als die der zur Herstellung einer Linse erforderlichen Grundmassenmenge aufweist;

— man in an sich bekannter Weise eine Grundmasse aus einem Monomer oder aus Monomeren mit polymerisierbaren Doppelbindungen ausarbeitet, wobei die Grundmasse für die vorgenannten elektromagnetischen Wellen absorptionsfähig ist, und

— man die Polymerisation der Masse innerhalb der geschlossenen Pressform durch Bestrahlung des Aufbaus mittels die oben erwähnte Wellenlänge aufweisender elektromagnetischer Wellen bei einer zur Aufrechterhaltung einer unter etwa 40° C liegenden Temperatur geeigneten Leistungsdichte auf der Höhe der Pressform vornimmt.

2. Herstellungsverfahren nach Anspruch 1, bei welchem es sich bei der Grundmasse um einen Vinyl- oder Allylmonomer oder eine Vinyl/ oder Allyl/Monomermischung oder eine Mischung dieser Monomere mit linearen Polymeren handelt, wobei die Polymerisation durch Bestrahlung mittels ultravioletter Strahlen mit einer Wellenlänge zwischen 0,2 und 0,4 µm vorgenommen wird.

3. Herstellungsverfahren nach einem der Ansprüche 1 oder 2, bei welchem es sich bei dem Werkstoff der Pressform (1, 2) um einen ungefüllten Polymer wie Polypropylen oder Polyäthylen handelt, wobei die Polymerisation der Grundmasse durch Bestrahlung mittels ultravioletter Strahlen mit einer Wellenlänge zwischen 0,2 und 0,4 µm vorgenommen wird.

4. Herstellungsverfahren nach einem der Ansprüche 2 oder 3, bei welchem man der Grundmasse ein zur Erhöhung des Absorptionsvermögen der besagten Masse befähigtes lichtempfindlich machendes Mittel zusetzt.

5. Herstellungsverfahren nach einem der Ansprüche 1, 2, 3 oder 4, bei welchem es sich bei der Grundmasse um einen Monomer oder eine Mischung von Monomeren mit einem Molekül hohen Volumens aus der folgenden Gruppe handelt: Hydroxyäthylmethacrylat, Hydroxypropylmethacrylat, Hydroxyäthylacrylat, Äthylenglykoldimethacrylat, Vinylpyrrolidon, Glycidylmethacrylat, Methacrylamid und Bisphenol-A-bis-(2-hydroxypropylmethacrylat).

6. Herstellungsverfahren nach Anspruch 5, dadurch gekennzeichnet, dass man der Grundmasse mindestens einen linearen Polymer, insbesondere Polyglycidylmethacrylat, Polymethylmethacrylat oder Polyvinylpyrrolidon, beimischt.

7. Herstellungsverfahren nach einem der Ansprüche 1, 2, 3, 4, 5 oder 6, dadurch gekennzeichnet, dass die Bestrahlung so vorgenommen wird, dass die leistungsdichte auf der Höhe des Aufbaus Pressform/Grundmasse zwischen etwa $0,1 \cdot 10^{-3}$ und $100 \cdot 10^{-3}$ W/cm³ liegt.

8. Herstellungsverfahren nach einem der Ansprüche 1, 2, 3, 4, 5, 6 oder 7, dadurch gekennzeichnet, dass man bei einem dem Luftdruck gleichen Druck arbeitet.

9. Herstellungsverfahren nach einem der Ansprüche 1, 2, 3, 4, 5, 6 oder 7, dadurch gekennzeichnet, dass man bei einem über dem Luftdruck liegenden Druck, von der Grössenordnung von 2 bis 10 bar, arbeitet.

10. Herstellungsverfahren nach einem der Ansprüche 1, 2, 3, 4, 5, 6, 7, 8 oder 9, dadurch gekennzeichnet, dass man eine Pressform (1, 2) verwendet, bei welcher mindestens die 20fache Werkstoffmasse der zur Herstellung einer Linse erforderlichen Grundmassenmenge eingesetzt wird.

11. Herstellungsverfahren nach einem der Ansprüche 1 bis 10, bei welchem man eine aus zwei Teilen (1, 2) bestehende Pressform verwendet, einem mit konkaver Oberfläche (1a) zur Bildung der konvexen Oberfläche der Linse, dem anderen mit konvexer Oberfläche (2a) zur Bildung der anderen Oberfläche der Linse, dadurch gekennzeichnet, dass nach dem Einfügen der Grundmasse in den Teil mit konkaver Oberfläche die beiden Teile der Pressform (1, 2) mit Hilfe leicht kegelförmiger, den beiden Pressformteilen eigener Umfangsseiten (1c, 2c) dicht gegeneinander geschlossen werden.

12. Durch Anwendung des Verfahrens gemäss eines der Ansprüche 1 bis 11 hergestelltes Haftglas.

## Claims

1. Process for the production of a finished contact lens, being of the type which consists in polymerising a base composition in a closed sealed mould (1, 2), reproducing in a hollow cast the shape of the lens to be obtained, said process being characterised in that

— the mould (1, 2) is made of a material which is transparent to, or shows slight absorption of, electromagnetic waves having a wavelength of between 1 and $10^{-6}$ µm approximately, said mould being made so as to possess a much higher thermal inertia than that of the amount of base composition required for producing a lens;

— a base composition is formulated, in a manner that is known *per se*, from a monomer or from monomers having polymerisable double bonds, the composition showing absorption of the abovementioned electromagnetic waves, and

— polymerisation of the composition is brought about inside the closed mould by irradiation of the assembly by means of electromagnetic waves having the previously mentioned wavelength, at a power density suitable for maintaining a temperature lower than 40°C approximately at the level of the mould.

2. Production process according to claim 1, in which the base composition is a vinyl or allyl monomer or monomer mixture or a mixture of these monomers with linear polymers, polymerisation being brought about by irradiation by means of ultraviolet rays having a wavelength of between 0.2 and 0.4 µm.

3. Production process according to either claim 1 or 2, in which the material of the mould (1, 2) is an unfilled polymer, such as polypropylene or polyethylene, polymerisation of the base composition being brought about by irradiation by means of ultraviolet rays having a wavelength of between 0.2 and 0.4 µm.

4. Production process according to either claim 2 or 3, in which a photosensitizing agent, suitable for increasing the absorptive capacity of the base composition, is added to said composition.

5. Production process according to one of the claims 1, 2, 3 or 4, in which the base composition is a monomer or a mixture of monomers having a molecule of high volume, belonging to the following group: hydroxyethyl methacrylate, hydroxypropyl methacrylate, hydroxyethyl acrylate, ethylene glycol dimethacrylate, vinyl pyrrolidone, glycidyl methacrylate, methacrylamide and bisphenol A bis (2 hydroxypropyl methacrylate).

6. Production process according to claim 5, characterised in that at least one linear polymer, particularly polyglycidyl methacrylate, polymethyl methacrylate or polyvinyl pyrrolidone, is admixed to the base composition.

7. Production process according to one of the claims 1, 2, 3, 4, 5, or 6, characterised in that irradiation is effected in such a way that the power density at the level of the mould/base composition assembly lies between about $0.1 \times 10^{-3}$ and $100 \times 10^{-3}$ W/cm³.

8. Production process according to one of the claims 1, 2, 3, 4, 5, 6 or 7, characterised in that it is carried out at a pressure equal to atmospheric pressure.

9. Production process according to one of the claims 1, 2, 3, 4, 5, 6 or 7, characterised in that it is carried out at a pressure higher than atmospheric pressure, of the order of 2 to 10 bar.

10. Production process according to one of the claims 1, 2, 3, 4, 5, 6, 7, 8 or 9, characterised in that a mould (1, 2) is used, in which a mass of material is employed which is at least 20 times higher than that of the amount of base composition required for producing a lens.

11. Production process according to one of the claims 1 to 10, in which a mould in two parts (1, 2) is used, one having a concave surface (1a) for the formation of the convex surface of the lens, the other having a convex surface (2a) for the formation of the other surface of the lens, characterised in that, after the base composition has been placed in the part with a concave surface, the two mould parts (1, 2) are tightly closed into each other with the aid of slightly conical peripheral sides (1c, 2c) present in the two mould parts.

12. Contact lens produced by carrying out the process in accordance with one of the claims 1 to 11.

Fig.1

Fig. 2

Fig. 3

Fig. 4